# EUROPÄISCHE PATENTSCHRIFT

(11) **EP 2 294 331 B1**
(45) Veröffentlichungstag und Bekanntmachung des Hinweises auf die Patenterteilung: **14.03.2012**
(21) Anmeldenummer: 09772123.7
(22) Anmeldetag: 27.06.2009
(51) Int. Cl.: F16K 31/383

(54) **HYDRAULISCHE VENTILVORRICHTUNG**
HYDRAULIC VALVE DEVICE
DISPOSITIF DE VANNE HYDRAULIQUE

(30) Priorität: 04.07.2008 DE 102008031745
(43) Veröffentlichungstag der Anmeldung: 16.03.2011
(73) Patentinhaber: Hydac Filtertechnik GmbH, 66280 Sulzbach/Saar (DE)
(72) Erfinder: RÜB, Winfried, 79761 Waldshut-Tiengen (DE)
(74) Vertreter: Bartels, Martin Erich Arthur
(86) Internationale Anmeldenummer: PCT/EP2009/004663
(87) Internationale Veröffentlichungsnummer: WO 2010/000423

(56) Entgegenhaltungen:
- GB-A- 540 596
- GB-A- 721 645
- GB-A- 865 419

## Beschreibung

Die Erfindung betrifft eine hydraulische Ventilvorrichtung mit einem Ventilgehäuse, mit einem von einer Betätigungseinrichtung ansteuerbaren Pilotkolben eines Pilotventils, der mittels eines ersten Energiespeichers in Richtung eines Ventilsitzes des Ventilgehäuses verfahrbar ist, wobei mittels des Pilotkolbens ein Fluidanschluß im Ventilgehäuse mit einem Fluidraum eines Sperrkolbens eines Sperrventils verbindbar ist, der mindestens eine fluidführende Verbindungsleitung der Ventilvorrichtung ansteuert, und eine fluidführende Steuerleitung aufweist, die von der Verbindungsleitung in den Fluidraum des Sperrkolbens mündet, der von einem zweiten Energiespeicher in Richtung eines zweiten Ventilsitzes bewegbar ist, wobei der Pilotkolben des Pilotventils und der Sperrkolben des Sperrventils parallel zueinander verschiebbar innerhalb des Ventilgehäuses geführt sind, und wobei der Pilotkolben und der Sperrkolben durch Einwirkung mindestens einer der beiden Energiespeicher in gegenläufiger Richtung auf ihren jeweils zuordenbaren Ventilsitz zubewegbar sind.

Eine derartige Ventilvorrichtung ist aus GB 721 645 A bekannt. Bei der bekannten Ventilvorrichtung sind in einem Gehäuse zwei Fluidräume vorgesehen, die über Fluidverbindungen miteinander verbunden sind. In einem ersten Fluidraum ist ein Pilotventil verschiebbar angeordnet, welches von einer Druckfeder beaufschlagt und über einen außerhalb des Gehäuses angeordneten Druckspeicher mit Druck beaufschlagbar ist. Im zweiten Fluidraum ist ein weiteres Ventil angeordnet, welches ebenfalls über eine Druckfeder am Ventilsitz gehalten ist. Die Ventilanordnung ist entsprechend einem gewünschten Öffnungsdruck ausgestaltet.

Diese hydraulische Ventilvorrichtung lässt sich den sogenannten entsperrbaren Rückschlagventilen zuordnen, die überwiegend mit Wegeventilen zusammenwirken und zu der Steuerung einer Last eingesetzt sind. Zur Einleitung einer Entsperrung des Rückschlagventiles wird entweder ein Hilfsdruck über das Wegeventil geschaltet oder es wird direkt der Ansteuerdruck des Wegeventils verwendet. Der Hilfs- oder Ansteuerdruck wird dann als sogenannter Aufstoßdruck eingesetzt, um ein Pilotventil zu öffnen, das die Rückseite des Sperrkolbens entlastet. Der Lastdruck im Nutz- oder Arbeitsanschluss greift dann dauernd an eine Ringfläche am Sperrkolben an und ist der Federkraft der jetzt entlasteten Rückseite entgegengerichtet. Der Ansteuerkolben des Pilotventils kann dann so orientiert sein, dass er nach dem Öffnen des Pilotventils auch den Sperrkolben in Öffnungsrichtung drückt. Der Ansteuerkolben des Pilotventils drückt also von der Seite der fluidführenden kanalartigen Verbindungsleitung zum Wegeschieber auf den genannten Sperrkolben und öffnet dort ein Vorsteuerventil von dem Federraum des Sperrkolbens in den Verbindungskanal, der in diesem Betriebszustand mit dem Rücklauf der Gesamtventilvorrichtung verbunden ist.

Zwischen der Lastseite und der Rückseite besteht mithin eine gedrosselte Verbindung, über die während der Entsperrung ein dauernder Steuerölstrom über das Pilotventil zum Niederdruck- oder Tankanschluss der Vorrichtung abfließt. Um diesen Verluststrom sinkt dann der am jeweiligen Nutz- oder Arbeitsanschluss angeschlossene hydraulische Verbraucher unter Last ab, ohne dass mit dem Steuerschieber regelmäßig in Form eines Steuerkolbens darauf ein Einfluss ausgeübt werden könnte. Man unterscheidet demgemäß zwei grundsätzliche Steuerkonzepte:
1. Das Steueröl wird über den Steuerkolben in den Rücklaufkanal der hydraulischen Vorrichtung geleitet. In der Neutralstellung stellt der Steuerkolben eine gedrosselte Entlastung zum Sperrkolben her, damit sich dieser eindeutig auf seinen zugehörigen Ventilsitz legen kann, ohne dass zwischen dem Ventilsitz und dem Steuerkolben ein Ölvolumen eingespannt wird. Zum Entsperren bei sehr niedrigen Lasten muss die gedrosselte Entlastung aber möglichst weit geöffnet werden, damit der Lastdruck den Sperrkolben auch heben kann. Um alle denkbaren Lastfälle abdecken zu können, muss dann doch eine große Entlastung gewählt werden, die dazu führt, dass beim Anfahren mit hohen Lasten die Minimalgeschwindigkeit hoch ist, was als unsicher in der Bedienung empfunden wird.
2. Das Steueröl wird am Steuerkolben vorbei direkt mit dem Leckanschluss bzw. einem Rücklaufanschluss R verbunden. Die Entlastungsdrossel am Steuerkolben für den Sperrkolben kann sehr klein gewählt werden, weil die Entlastung der Rückseite des Sperrkolbens unabhängig von der Feinsteuerung des Steuerschiebers ist. Als nachteilig erweist sich jedoch wiederum der große Steuerölstrom durch das Pilotventil hindurch bei hohen Lasten.

Als kleinster geforderter Senkenstrom kann ca. 1 I/min angenommen werden. Der Verluststrom kann dann je nach Auslegung und Höhe des Lastdruckes aber ein Vielfaches davon annehmen und ist damit nicht mehr hinnehmbar. Insbesondere erweist sich die angeschlossene Arbeitsgerätschaft im Feinsteuerbereich bei hohen Drücken nicht mehr hinreichend genau steuerbar.

In der Praxis sind verschiedene Lösungen bekannt zur Betätigung des Ansteuerkolbens am Pilotventil. Konstruktiv einfach ist das gegenseitige Aufstoßen unter der Einwirkung des Zulaufdruckes; allerdings kann dann bei sogenannten voreilenden Lasten der Zulaufdruck einbrechen, und es beginnt ein Kreislauf von Schließen und Öffnen des Sperrkolbens, begleitet von ruckartigen Bewegungen der angeschlossenen hydraulischen Arbeitsgerätschaft. Eine Funktionsverbesserung bringt ein lastunabhängiger Öffnungsdruck in Form des Ansteuerdruckes für den Steuerkolben oder Steuerschieber. Der dahingehende Aufbau führt aber zu einer komplizierten Kanalführung innerhalb der Ventilvorrichtung und der in der Ventilmitte sitzende Ansteuerkolben weist eine lange Steuerachse auf, was mit einer Zunahme der Baugröße des Ventils einhergeht (WO 2006/105765 A1).

In der DE 199 19 014 A1 ist eine weitere Ventilvorrichtung mit entsperrbaren Rückschlagventilen für die Ansteuerung zweier Arbeits- oder Nutzanschlüsse beschrieben. Bei der bekannten Lösung drückt jeweils der Arbeitsdruck des unter Zulaufdruck stehenden Arbeitsanschlusses das Rückschlagventil der Gegenseite auf. Im Falle der vorauseilenden Lasten sinkt dann der Zulaufdruck bis auf den Atmosphärendruck und der Aufstoßdruck kann zusammenbrechen. Infolgedessen schließt das Rückschlagventil, und der hydraulische Verbraucher kann zum Stillstand kommen. Im dahingehenden Fall steigt der Zulaufdruck wiederum spontan an, öffnet das Rückschlagventil und beschleunigt die Last, bis sie wieder voreilt. Die beschriebene Regelungsperiode beginnt dann wiederum von vorne.

Durch die US 2002/0029810 A1 ist eine Ventilvorrichtung bekannt, bei der die Entsperrung über den Steuerkolben eingeleitet wird, wozu ein quer zur Steuerkolbenachse liegendes Pilotventil eingesetzt ist. Das derart quer angeordnete Pilotventil ist konstruktiv schwierig mit den zugeordneten Anschlussleitungen zu verbinden und erhöht die Ventileinbauhöhe um einen wesentlichen Betrag. Zur Erhöhung der Fertigungssicherheit ist das genannte Pilotventil in einer eigenständigen Büchse der Ventilvorrichtung gelagert. In der DE 10 2005 033 577 A1 sind wiederum Pilotventile beschrieben, die mechanisch aufgestoßen und zur Verringerung der Querkräfte auf den Steuerkolben nicht axial betätigt, sondern in einer Art Schwenkbewegung gekippt werden. Die insoweit mechanische Entriegelung ist bei einem etwaigen Ausfall der hydraulischen Energie weiterhin betriebsbereit, wobei der technische konstruktive Aufwand zur Ansteuerung der Pilotventile allerdings beträchtlich ist, insbesondere weil ein zusätzliches Vorsatzgehäuse vorzusehen ist, das die Pilotventile trägt, und eine dünne Verbindungsbohrung ist vom jeweiligen Rückschlagventil auf die Gegenseite zu führen.

Durch die DE 103 25 294 A1 ist eine gattungsgemäße Ventilvorrichtung bekannt in der Art einer hydraulischen Steueranordnung zur lastdruckunabhängigen Ansteuerung eines Verbrauchers, mit einem Gehäuseabschnitt, vorzugsweise in der Art einer Ventilscheibe ausgebildet, in der ein die Druckmittelströmung zum Verbraucher steuerndes, stetig einstellbares Wegeventil aufgenommen ist, dem eine Individualdruckwaage zugeordnet ist, und mit zumindest einem im Druckmittelströmungspfad zwischen dem Wegeventil und dem Verbraucher angeordneten Sperrventil, das zum Ermöglichen einer Druckmittelströmung vom zugeordneten Verbraucheranschluss entsperrbar ist, und mit einem Nachsaugventil über das bei einer Unterversorgung des Verbrauchers Druckmittel aus dem Tank nachsaugbar ist. Dadurch, dass bei der bekannten Lösung das Sperrventil über ein Pilotventil vorgesteuert ist, dessen Achse senkrecht zur Achse des Wegeventils und des achsparallel dazu angeordneten Sperrventils verläuft, wobei das Pilotventil mechanisch über einen Ventilschieber des Wegeventils aufsteuerbar ist und dass die Achse des Druckbegrenzungs- und Nächsaugventils senkrecht zu den Achsen des Wegeventils und des Pilotventils verläuft, zeichnet sich die bekannte Lösung durch eine besondere Kompaktheit aus, wobei alle wesentlichen, bei einem sogenannten LUDV-System erforderlichen Komponenten mit minimalem Bauraum aufgenommen sind.

Ausgehend von diesem Stand der Technik liegt der Erfindung die Aufgabe zugrunde, eine konstruktiv einfache aufbauende Ventileinrichtung zu schaffen, die gleichfalls kompakt aufbaut und funktionssicher im Betrieb ist und die sicherstellt, dass voreilende Lasten die Entsperrung nicht beeinträchtigen können. Eine dahingehende Aufgabe löst eine hydraulische Ventileinrichtung mit den Merkmalen des Patentanspruches 1 in seiner Gesamtheit.

Die erfindungsgemäße hydraulische Ventilvorrichtung ist dadurch gekennzeichnet, dass der erste und der zweite Energiespeicher und der Sperrkolben im Fluidraum angeordnet sind und gemeinsam mit dem Pilotkolben und der Betätigungseinrichtung koaxial zur Mittenachse des Fluidraums angeordnet sind, dass das Pilotventil auf der Rückseite des Sperrkolbens und auf dessen Mittenachse derart angeordnet ist, dass sein sitzdichter Pilotkolben in den Fluidraum ragt, und dass die Betätigungseinrichtung einen Betätigungsmagneten oder eine Fluidansteuerleitung aufweist, die von einem Steuerkolben der Ventilvorrichtung mit Fluiddruck beaufschlagbar jeweils eine Bewegung des Ansteuerkolbens veranlassen.

Das insoweit eingesetzte sitzdichte Pilotventil mit seinem Pilotkolben entlastet die Rückseite des Sperrkolbens zum Tank hin und nicht wie bei den bekannten Lösungen zur Steuerkolbenachse. Das Pilotventil wird insoweit vom Entriegelungsdruck in der Fluidansteuerleitung angesteuert, wobei dieser Entriegelungsdruck Y unabhängig von der Last ist und vorzugsweise von einer Betätigungseinrichtung aufzubringen ist. Demgemäß wird die Entsperrung nicht über voreilende Lasten beeinträchtigt. Anstelle des Entriegelungsdruckes Y kann die Betätigungseinrichtung auch einen Betätigungsmagneten zum Ansteuern des Ansteuerkolbens einsetzen.

Das Pilotventil ist dabei erfindungsgemäß in platzsparender Weise auf der Rückseite des Sperrkolbens und auf dessen Mittenachse derart angeordnet, dass sein sitzdichter Pilotkolben in den typischerweise als Federraum des Sperrkolbens dienenden Fluidraum ragt. Der Ansteuer- oder Aufstoßkolben des Pilotventils ist also insoweit im Ventilgehäuse entlang der Rückschlagventilachse gelagert und, da der Öffnungshub des Pilotventils größer als der des Sperrkolbens ist, ist ein funktionssicherer Betrieb gewährleistet. Das entsperrbare Rückschlagventil in Form der hydraulischen Ventilvorrichtung ist achsparallel zum Steuerkolben angeordnet, so dass ein platzsparender Einbau innerhalb eines Wegeventils möglich ist. Ferner kommt es nicht zu sekundären Verlustströmen über die Steuerleitung, was die Funktionssicherheit erhöht.

Vorteilhafte Ausgestaltungen der erfindungsgemäßen Ventilvorrichtung sind Gegenstände der Unteransprüche.

Bei einer besonders bevorzugten Ausführungsform der erfindungsgemäßen Ventilvorrichtung ist das entsperrbare Rückschlagventil mit einer doppelt sitzdichten Funktion ausgestattet. Das zusätzliche sitzdichte Rückschlagventil wird in den Sperrkolben so eingebaut, dass es vom Zulaufkanal aus in den Federraum öffnet. Dadurch kann sich der Zulaufdruck in der Federkammer des Haupt-Sperrkolbens abbilden und verhindert, dass der Sperrkolben ungewollt öffnet. Erst wenn das sitzdichte Vorsteuerventil gebildet durch den Ansteuerkolben mit Pilotventil auf der Rückseite aktiv geöffnet wird, kann auch der Sperrkolben in Fließrichtung öffnen. Insoweit ergibt sich auch ein verbessertes Schließen und passives Zuhalten für die Ventilvorrichtung. Damit beim Zuhalten mit dem Sperrkolben kein Leckölstrom von der mit Zulaufdruck versehenen Federkammer in den Lastraum fließt, ist die Drosselstelle zum Lastraum mit einer zusätzlichen Ventileinrichtung mit einem Ventilteil bevorzugt in der Art einer Schließkugel versehen. Die Ventileinrichtung öffnet bei Durchfluss vom Lastraum in den Federraum des Sperrventils. Beim Schließen des doppelt sitzdichten Sperrventils kann dann weiterhin das notwendige Verdrängungsvolumen in den Federraum einfließen, jedoch umgekehrt keine Undichtigkeit in Ausflussrichtung (beispielsweise zu einem Lenkzylinder hin) auftreten. Damit ist die genannte Ventileinrichtung in beiden möglichen Durchflussrichtungen dicht. Die dahingehende Ausgestaltung wird in vorteilhafter Weise für Sicherheitsanwendungen eingesetzt, die meist redundante Steuerungskonzepte verlangen.

Nachstehend ist die Erfindung anhand von in der Zeichnung dargestellten Ausführungsbeispielen im Einzelnen erläutert. Es zeigen in prinzipieller und nicht maßstäblicher Darstellung die
- Fig. 1: in der Art eines Längsschnittes eine erste Ausführungsform durch die erfindungsgemäße hydraulische Ventilvorrichtung;
- Fig. 2: eine der Fig. 1 entsprechende Darstellung einer geänderten Ausführungsform und
- Fig. 3: in der Art einer Ansichtsdarstellung die Einbausituation der Ventilvorrichtung nach der Fig. 1 in eine an sich übliche Wegeventilanordnung.

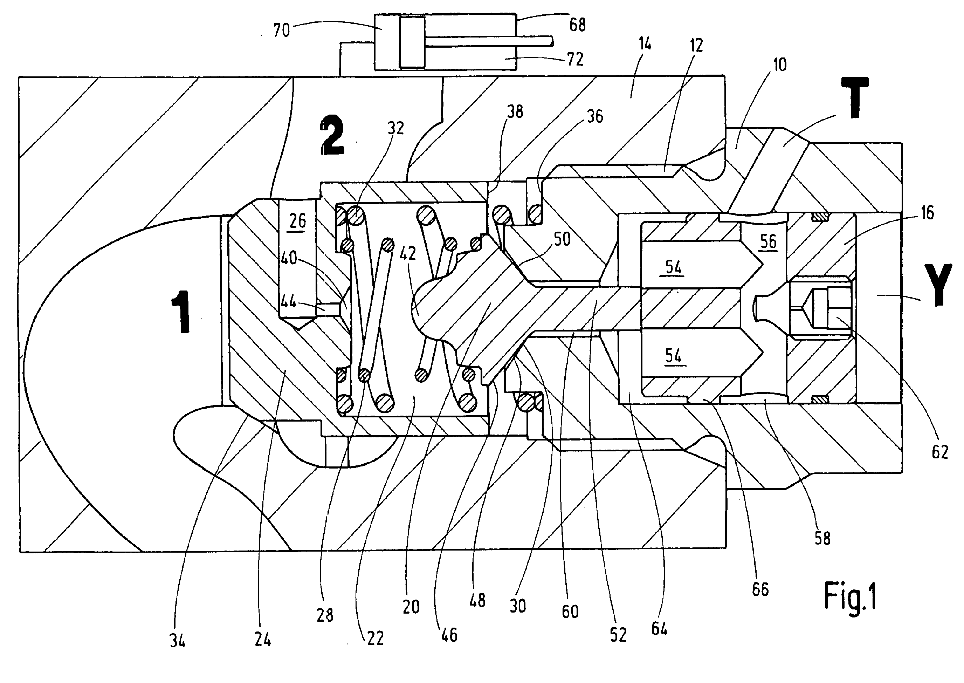

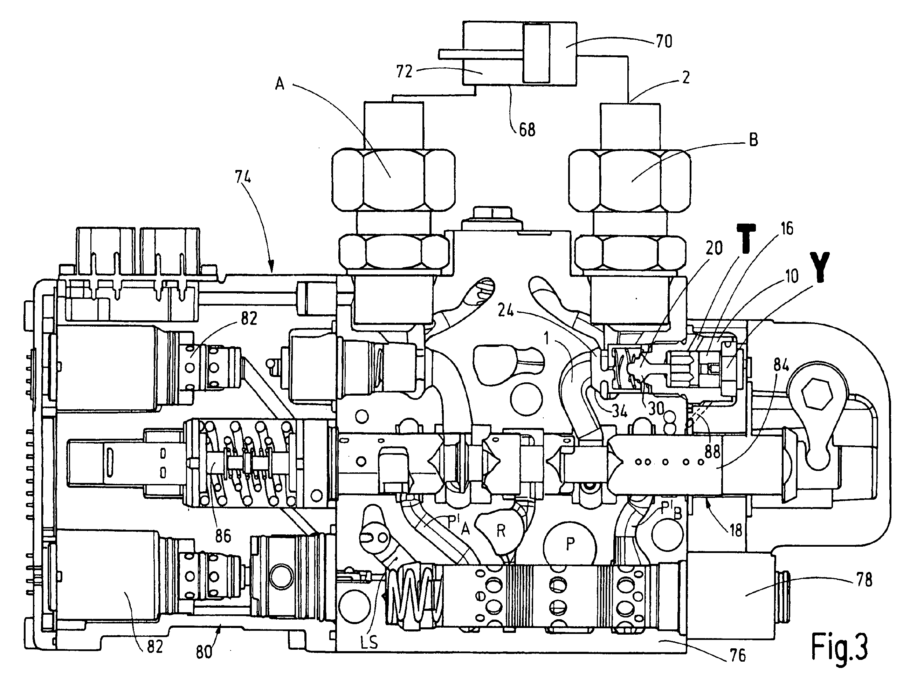

Die hydraulische Ventilvorrichtung nach der Fig. 1 weist ein Ventilgehäuse 10 auf, das in der Art einer Einschraubpatrone über eine Einschraubstrecke 12 an Gehäuseteilen 14 eines Drittbauteils, beispielsweise in Form eines Wegeventils (siehe Fig. 3), festlegbar ist. In dem Ventilgehäuse 10 ist ein Ansteuerkolben 16 längsverfahrbar geführt, der von einer als Ganzes mit 18 bezeichneten Betätigungseinrichtung betätigbar ein Pilotventil 20 ansteuert, mittels dessen ein Fluidanschluss T in der Art eines Niederdruck- oder Tankanschlusses im Ventilgehäuse 10 mit einem Fluidraum 22 eines Sperrkolbens 24 verbindbar ist. Mittels des Sperrkolbens 24 ist eine fluidführende Verbindungsleitung 1, 2 der Ventilvorrichtung ansteuerbar, wobei der Sperrkolben 24 weiter eine fluidführende Steuerleitung 26 aufweist, die von der Verbindungsleitung 1, 2 in den Fluidraum 22 des Sperrkolbens 24 mündet. Die Betätigungseinrichtung 18 weist eine Fluidansteuerleitung Y auf, die den sogenannten Entriegelungsdruck der Betätigungseinrichtung 18 auf die Rückseite des Ansteuerkolbens 16 leitet. Wie die Fluidansteuerleitung Y mit dem Entriegelungsdruck beaufschlagt wird, wird im Folgenden noch näher erläutert werden.

Wie die Fig. 1 weiter zeigt, ist mittels eines ersten Energiespeichers 28 in Form einer Druckfeder das Pilotventil 20 in Richtung eines Ventilsitzes 30 des Ventilgehäuses 10 verfahrbar gehalten, wobei mittels eines zweiten Energiespeichers 32 gleichfalls in Form einer Druckfeder der Sperrkolben 24 in gegenläufiger Richtung auf einen weiteren zweiten Ventilsitz 34 zubewegbar ist, der insoweit die fluidführende Verbindungsleitung 1, 2 als Wandungsteil mitbegrenzt. Die beiden Energiespeicher 28, 32 sind innerhalb des Fluidraumes 22 geführt, und der zweite Energiespeicher 32 in Form einer Druckfeder umfasst den ersten Energiespeicher 28 mit seiner zuordenbaren Druckfeder. Der erste Energiespeicher 28 stützt sich mit seinem einen freien Ende an der Innenseite des Steuerkolbens 24 ab und liegt mit seinem anderen Ende an seiner Stirnseite des Pilotventils 20 an. Der zweite Energiespeicher 32 stützt sich gleichfalls an derselben Innenseite des Steuerkolbens 24 ab und liegt mit seinem anderen Ende an einer freien Stirnseite des Ventilgehäuses 10 an, das insoweit in fluidführender Verbindung mit dem Fluidraum 22 steht und eine Begrenzungswand desselben ausbildet. Insoweit bildet die genannte stirnseitige Begrenzungswand einen Anschlag 36 aus, an den der Sperrkolben 24 in seiner ganz rechten Verfahrstellung mit seiner freigehaltenen Umfassungswand 38 anschlagen kann. An der Stelle, an der die fluidführende Steuerleitung 26 in den Fluidraum 22 des Sperrkolbens 24 mündet, ist eine Mündungsstelle 40 vorgesehen, die von dem freien Stirnende des Pilotventils 20 verschließbar ist. Für den dahingehenden Abschluss ist die Mündungsstelle 40 zum Fluidraum 22 des Sperrkolbens 24 hin konisch erweitert, und das Pilotventil 20 weist an seiner freien Stirnseite eine Schließkalotte 42 auf, die in dichtender Weise in die Mündungsstelle 40 eingreifen kann. Zwischen der Mündungsstelle 40 und der sonstigen fluidführenden Steuerleitung 26 ist eine Drosselstelle 44 in Form einer Drosselbohrung angeordnet. Die Schließkalotte 42 des Pilotventils 20 weist an ihrer Unterseite eine konisch verlaufende Dichtfläche 46 auf, die in Anlage bringbar ist mit einer weiteren konischen Dichtfläche 48 des Ventilgehäuses 10, wobei für den Erhalt einer linienförmigen Dichtstelle 50 als erstem Ventilsitz 30 die Neigung der weiteren Dichtfläche 48 geringer gewählt ist denn für die Dichtfläche 46 des Pilotventils 20. Im geschlossenen Zustand der Ventilvorrichtung gemäß der Darstellung nach der Fig. 1 drückt der erste Energiespeicher 28 das Pilotventil 20 gegen den genannten ersten Ventilsitz 30.

Das Pilotventil 20 weist darüber hinaus eine stegartige Verlängerung 52 auf, die eine Verbindung herstellt zwischen Pilotventil 20 und Ansteuerkolben 16. Die dahingehende Verbindung kann einstückig sein. Der an sich zylindrische Ansteuerkolben 16 weist Durchgangsbohrungen 54 auf, die in einen Querkanal 56 münden, der wiederum in einen Ringkanal 58 austritt, der in jeder Verfahrstellung des Ansteuerkolbens 16 eine fluidführende Verbindung mit dem Fluidanschluss T innerhalb des Ventilgehäuses 10 aufweist. Im Übrigen ist die stegartige Verlängerung 52 in einem verbreiterten Durchgangskanal 60 im Ventilgehäuse 10 geführt, so dass bei geöffnetem Pilotventil 20 der erste Ventilsitz 30 freigegeben ist mit der Folge, dass eine fluidführende Verbindung besteht zwischen einem Teil 2 der Verbindungsleitung 1, 2 und dem Fluidanschluss T, und zwar über die fluidführende Steuerleitung 26, die Drosselstelle 44, die Mündungsstelle 40, den Fluidraum 22, den Durchgangskanal 60, die Durchgangsbohrungen 54, den Querkanal 56 und den Ringkanal 58.

Die Fluidansteuerleitung Y ist darüber hinaus über eine Drosselverbindungsstelle 62 fluidführend mit einem Kammerraum 64 des Ansteuerkolbens 16 permanent verbunden, wobei der Kammerraum 64 wie bereits dargelegt bei geöffnetem Pilotventil 28 eine Fluidverbindung zwischen dem Fluidanschluss T im Ventilgehäuse 10 und dem Fluidraum 22 des Sperrkolbens 24 herstellt. Für eine fluidführende Verbindung von Kammerraum 64 mit Drosselverbindungsstelle 62 dienen wiederum der Querkanal 56 und die in Längsrichtung eingebrachten Ringkanäle 58, die diametral zur Längsachse des Pilotventils 20 einander gegenüberliegend angeordnet sind. Ferner ist der Ringkanal 58 über eine umfangsseitige Verbreiterung 66 am Außenumfang des Ansteuerkolbens 16 fluiddicht vom Kammerraum 64 separiert.

Zum Ansteuern einer hydraulischen Arbeitsgerätschaft, im vorliegenden Fall in Form eines hydraulischen Arbeitszylinders 68, ist der Teil 2 der Verbindungsleitung 1, 2 fluidführend mit der sogenannten Kolbenseite 70 des Arbeitszylinders 68 verbunden. Die Stangenseite 72 wiederum ist an eine nicht näher dargestellte hydraulische Steuereinrichtung angeschlossen, die für die nachfolgende vereinfachte Funktionsbetrachtung aber zunächst weggelassen ist. Für einen Betrieb der Vorrichtung ist darüber hinaus in Abhängigkeit der Betätigungssituation der Betätigungseinrichtung 18, der Teil 1 der Verbindungsleitung 1, 2 an eine Druckversorgungsquelle, beispielsweise in Form einer Hydropumpe über einen Druckversorgungsanschluss P (siehe Fig. 3) angeschlossen oder die Betätigungseinrichtung 18 schaltet den Teil 1 der Verbindungsleitung 1, 2 drucklos, indem Teil 1 an einen Rücklaufanschluss R angeschlossen wird.

Im Folgenden soll nunmehr zum besseren Verständnis die Funktionsweise der hydraulischen Ventilvorrichtung gemäß der Darstellung nach der Fig. 1 näher erläutert werden. Zum Heben einer Last ist der hydraulische Arbeitszylinder 68 auf der Kolbenseite 70 anzusteuern, damit insoweit der Zylinder ausfahren kann. Für den dahingehenden Vorgang ist der druckführende Teil 1 der Verbindungsleitung 1, 2 mit dem Teil 2 zu verbinden, der an die Kolbenseite 70 fluidführend angeschlossen ist. Der ansteigende Druck in Teil 1 als Zulauf überschreitet den anstehenden Lastdruck in Teil 2 des Anschlusses der Kolbenseite 70, so dass der Sperrkolben 24 entgegen der Wirkung des zweiten Energiespeichers 32 in Blickrichtung auf die Fig. 1 gesehen nach rechts bewegt wird. Es beginnt dann ein Volumenstrom von Teil 1 nach Teil 2 zu fließen, und der Sperrkolben 26 öffnet so weit, bis sich ein Kräftegleichgewicht aufgrund des Druckabfalls am zweiten Ventilsitz 34 eingestellt hat. Bei der genannten Öffnungsbewegung schiebt der Sperrkolben 24 entsprechend seinem Hubvolumen im Fluidraum 22 Öl von seiner Rückseite über die Drosselstelle 44 in den Lastdruckraum teilweise gebildet durch Teil 2 der Verbindungsleitung 1, 2, und der maximale Öffnungshub wird durch den Anschlag des Sperrkolbens 24 am Anschlag 36 des Ventilgehäuses 10 begrenzt.

Zum Senken der Last, bei der die Kolbenstangeneinheit des Arbeitszylinders 68 in Richtung der Kolbenseite 70 wieder einfährt, wird in der FluidAnsteuerleitung Y ein entsprechender Entriegelungsdruck aufgebracht, der den Ansteuerkolben 16 in Blickrichtung auf die Fig. 1 gesehen von rechts nach links bewegt und dabei über den Pilotkolben in Form der Verlängerung 52 das Pilotventil 20 nach links mitnimmt, wobei das Pilotventil 20 den ersten Ventilsitz 30 freigibt. Mit der dahingehenden Öffnung des Fluidweges über den Durchgangskanal 60 wird der Druck auf der Rückseite des Sperrkolbens 24 und mithin im Fluidraum 22 schlagartig abgebaut, und ein entsprechender Steuerölstrom fließt zum Fluidanschluss T im Ventilgehäuse 10. Dabei bewegt sich der Sperrkolben 24 auf das Pilotventil 20 zu, und setzt sich der Sperrkolben 24 unmittelbar auf das Pilotventil 20, wird die Mündungsstelle 40 und mithin die Drosselstelle 44 fluiddicht verschlossen. Der insoweit kurzzeitig fließende Verluststrom zum Fluidanschluss T hin wird dann abgeschaltet. Die hohe Öffnungskraft des Lastdruckes, die auf der Kolbenseite 70 des Arbeitszylinders 68 ansteht, wirkt auf die freie Ringfläche am Sperrkolben 24 ein und bewegt das Pilotventil 20 nach rechts zurück in seine den Ventilsitz 30 abschließende Richtung. Wenn der Sperrkolben 24 jedoch an seinem Anschlag stehen bleibt, dann ist das Pilotventil 20 noch geöffnet und die Rückseite des Sperrkolbens 24 mit seinem Fluidraum 22 bleibt mit dem Fluidanschluss T verbunden.

Selbst bei voreilenden Lasten ist die Entsperrung nicht beeinträchtigt und kann sicher durchgeführt werden. Mit der erfindungsgemäßen Ventilvorrichtung ist jedenfalls ein sekundärer Verluststrom mit unkontrollierter Senkenbewegung durch ein zweites Sitzventil zwischen Pilotventil und Sperrkolben, wie teilweise im Stand der Technik aufgezeigt, vermieden. Die Senkenbewegung wird nur über die Betätigungseinrichtung 18 veranlasst und sicher durchgeführt. Im Übrigen ist die Abstimmung zwischen der Drosselstelle 44 im Sperrkolben 24 mit den Entlastungskanälen unkritisch, weil die angesprochene Drosselverbindungsstelle 44 nach dem Öffnen sofort mittels des Pilotventiles 20 wieder geschlossen wird. Es können daher auch insoweit keine Staudrücke in der Entlastungsleitung und auf der Rückseite entstehen. Insoweit kann auch verzögerungsfrei bei sehr niedrigen Lastdrücken am Arbeitszylinder 68 der Sperrkolben 24 von seinem Ventilsitz 34 abgehoben werden, um einen problemlosen Fluidrücklauf von Teil 2 nach Teil 1 der Verbindungsleitung 1, 2 zu gewährleisten, wobei im dahingehenden Rücklauffall Teil 1 der Verbindungsleitung 1, 2, wie bereits dargelegt, an einen Rücklaufanschluss R mittels einer Betätigungseinrichtung 18 anzuschließen ist.

Im Folgenden wird nun der Einsatz eines entsperrbaren Rückschlagventils nach der vorstehenden Beschreibung, anhand einer Wegeventillösung nach der Fig. 3, als Teil der hydraulischen Ventilvorrichtung näher beschrieben. Insoweit werden auch die Zusammenhänge des entsperrbaren Rückschlagventils mit der Betätigungseinrichtung 18 näher erläutert. Die Fig. 3 zeigt ein als Ganzes mit 74 bezeichnetes Wegeventil. Der dahingehende Wegeventilaufbau ist im Stand der Technik üblich, sodass an dieser Stelle hierauf nicht mehr in allen Einzelheiten eingegangen wird, sondern nur noch insoweit als es für das Verständnis der erfindungsgemäßen Rückschlagventillösung notwendig ist. Das Wegeventil 74 weist ein mehrteiliges Steuergehäuse 76 auf, mit einer Vielzahl von Fluidleitungen und Fluidanschlüssen. So weist die Fluidanschlussanordnung unter anderem einen Druckversorgungsanschluss P, einen Rücklaufanschluss R, einen Sektions-loadsensing-Anschluß LS, zwei Steueranschlüsse P'_{A} und P'_{B} sowie zwei Nutzanschlüsse A, B auf. Zur Ansteuerung der genannten Fluidanschlussanordnung dient eine Druckwaage 78, die insoweit den einzelnen Fluidanschfüssen vorgeschaltet ist.

Eine als Ganzes mit 80 bezeichnete Steuereinrichtung weist in bekannter und daher nicht mehr näher beschriebener Art und Weise zwei Pilotsteuerventile 82 auf, die unter anderem der Ansteuerung eines Steuerkolbens 84 dienen, der in der Fig. 3 in seiner nicht ausgelenkten Mitten- oder NeutralStellung dargestellt ist. Die dahingehende Mitten- oder Neutralstellung kann auch durch eine Federspeichereinrichtung 86 entsprechend unterstützt werden. Des weiteren ist an den Nutzanschlüssen A, B wiederum der hydraulische Arbeitszylinder 68 angeschlossen, wobei die Kolbenseite 70 wiederum über den Nutzanschluss B mit dem Teil 2 der Verbindungsleitung 1, 2 fluidführend in Verbindung steht und diesmal ist der Stangenraum 72 über eine fluidführende Verbindungsleitung mit dem Nutzanschluss A verbunden, sodass insoweit das Wegeventil 74 auch die Stangenseite entsprechend ansteuern kann. Bei den Nutzanschlüssen A, B ist jeweils das entsperrbare Rückschlagventil gemäß der Lösung nach der Fig. 1 vorgeschaltet. Für den Hebevorgang einer Last oder den Ausfahrvorgang der bereits erwähnten Kolbenstangeneinheit wird mittels der Betätigungseinrichtung 18 der Steuerkolben 84 in Blickrichtung auf die Fig. 3 gesehen nach rechts bewegt und der Teil 1 der Verbindungsleitung 1, 2 wird druckführend mit dem Steueranschluss P'_{B} verbunden. Aufgrund des damit einhergehenden Zulaufdruckes öffnet der Sperrkolben 24 und insoweit steht am Nutzanschluss B der Versorgungsdruck P'_{B} an. Bei der dahingehenden Ausfahrbewegung wird Ölvolumen aus dem Stangenraum 72 über den Nutzanschluss A verdrängt und durch Entsperren des Rückschlagventils, das für den Nutzanschluss A zuständig ist, gerät dergestalt die ablaufende Ölmenge in Richtung des Rücklaufanschlusses R. Soll die Kolbenstangeneinheit in Richtung der Kolbenseite 70 einfahren, verschiebt sich unter dem Einfluß der von einer Bedienperson ansteuerbaren Betätigungseinrichtung 18 der Steuerkolben 84 von rechts nach links und der Teil 1 der Verbindungsleitung 1, 2 wird an den Rücklaufanschluss R angeschlossen im wesentlichen drucklos geschaltet. Der an P'_{B} anstehende Steuerdruck wird dann über den Querkanal 88 an die Fluidansteuerleitung Y weitergeleitet und insoweit dann der Entsperrvorgang ausgeführt. Alternativ kann der Querkanal 88 mit dem niedrigeren Druck des Steuerkreises oder direkt mit dem Druckausgang der Pilotsteuenrentile 82 verbunden werden. Das für den Nutzanschluss A zuständige, hydraulisch entsperrbare Rückschlagventil übernimmt dann die Druckversorgung für den Einfahrvorgang über den druckbeaufschlagten Steueranschluss P'_{A}. Insoweit dient der Steuerdruck im Steueranschluss P'_{A} im Bedarfsfall auch dafür, auf der Rückseite des Rückschlagventiles für den Nutzanschluss A den beschriebenen Entsperrvorgang auszulösen.

Der mit 84 bezeichnete Steuerkolben des Wegeventils 74 wird fachsprachlich auch mit Steuerschieber bezeichnet und als Betätigungseinrichtung 18 kann anstelle der Fluidansteuerleitung Y auch ein nicht näher dargestellter Betätigungsmagnet treten, beispielsweise in Form eines Proportional-Magneten, der entsprechend elektrisch bestromt den Ansteuerkolben 16 mit Pilotventil 20 für eine hydraulische Entsperrung ansteuert. Die hier vorgestellte rein fluidische Lösung hat aber den Vorteil, dass man für den Einsatz des Wegeventils 74 bis auf die Pilotsteuerventile 82 keinen Betätigungsstrom zur Verfügung zu stellen braucht. Auch kann wie bereits Eingangs erläutert, das entsperrbare Rückschlagventil als hydraulische Ventilvorrichtung nur der Ansteuerung eines Nutzanschlusses und eines hydraulischen Verbrauchers dienen. Anstelle des gezeigten hydraulischen Arbeitszylinders 68 kann auch eine sonstige hydraulisch betätigbare Arbeitseinrichtung treten, beispielsweise in Form eines hydraulischen Schwenkmotors (nicht dargestellt) und dergleichen mehr.

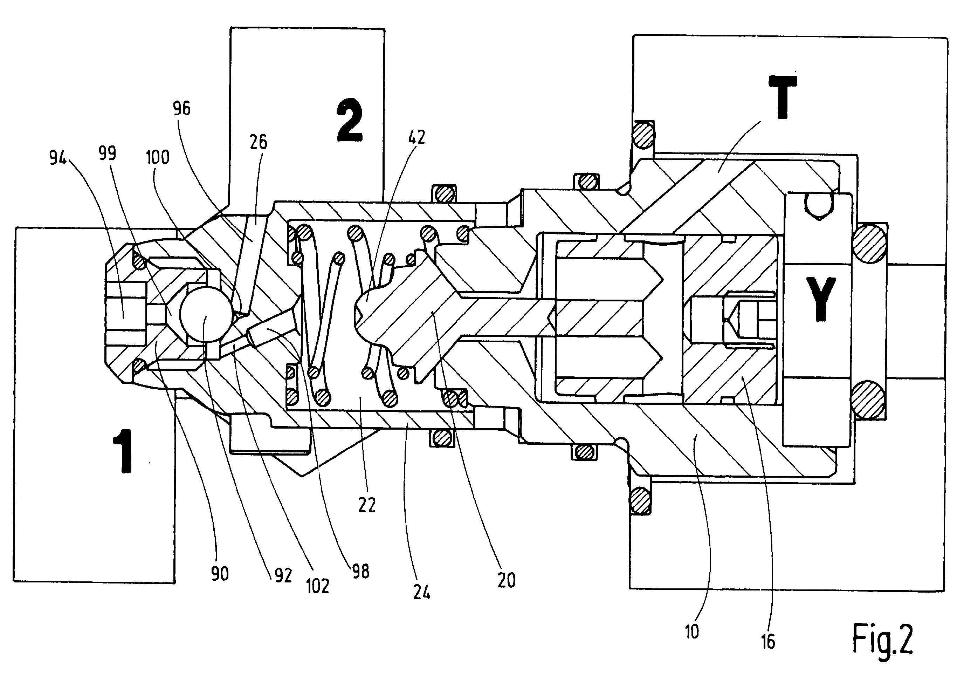

Die geänderte Ausführungsform nach der Fig. 2 wird nur noch insofern erläutert, als sie sich wesentlich von der Ausführungsform nach der Fig. 1 unterscheidet. Dabei werden dieselben Bauteile auch mit denselben Bezugszeichen wiedergegeben, wobei das bisher Gesagte insoweit dann auch für die geänderte Ausführungsform gilt. Die geänderte Ausführungsform nach der Fig. 2 ist insofern modifiziert, als am linken freien Ende des Sperrkolbens 24 eine zusätzliche Ventileinrichtung 90 eingesetzt ist, mit einem Ventilteil 92 in Form einer Schließkugel, die insoweit in Wandungsteilein des Sperrkolbens 24 geführt, eine Anschlussstelle 94 an den Teil 1 der Verbindungsleitung 1, 2 vom Fluiddurchfluss her ansteuert. Ferner ist die fluidführende Steuerleitung 26 innerhalb des Sperrkolbens 24 in zwei fluidführende Zweige 96, 98 aufgeteilt, wobei gemäß Darstellung nach der Fig. 2 das Ventilteil 92 den Zweig 96 zu Teil 2 der Verbindungsleitung 1, 2 absperrt.

Soll das entsperrbare Rückschlagventil nach der Fig. 2 geöffnet werden, soll also eine fluidführende Verbindung zwischen den Teilen 1 und 2 der Verbindungsleitung 1, 2 hergestellt werden, steht zunächst der Zulaufdruck in Teil 1 über die Ventileinrichtung 90 und dem zweiten Zweig 98 im Fluidraum 22 an. Insoweit sperrt also das Ventilteil 92 nur den ersten Zweig 96 ab. Da aber der Druck im Fluidraum 22 dem Zulaufdruck in Teil 1 der Verbindungsleitung 1, 2 entspricht, öffnet der Sperrkolben nicht und erst wenn das derart sitzdichte Vorsteuerventil auf der Rückseite wie beschrieben über die Fluidansteuerleitung Y oder einen Betätigungsmagneten aktiv geöffnet oder entsperrt wird, öffnet auch der Sperrkolben 24 durch Bewegung in Blickrichtung auf die Fig. 2 gesehen nach rechts den Fluidweg von Teil 1 zu Teil 2 der Verbindungsleitung 1, 2, weil der Druck im Fluidraum 22 sich zur Anschlußleitung T entspannen kann.

Neben diesem definierten Öffnungsvorgang ist auch das Schließen und das passive Zuhalten insoweit verbessert. Steht beim Absenken der Last oder Einfahren der Kolbenstangeneinheit in den Arbeitszylinder 68, bei der in Fig. 2 gezeigten Ventilstellung ein höherer Fluiddruck in Teil 2 der Verbindungsleitung 1, 2 an, wirkt dieser Druck über den ersten Zweig 96 auf das Ventilteil 92, das insoweit sich innerhalb eines Ventilraumes nach links bewegt und die Anschlussstelle 94 verschließt. Insofern sind dann die beiden Zweige 96, 98 miteinander fluidführend verbunden und der Fluiddruck in Teil 2 steht auch im Fluidraum 22 an. Führt man dann wiederum die entsprechende Entsperrung über die Betätigungseinrichtung 18 durch, öffnet sich wiederum in bereits beschriebener Weise der Sperrkolben 24 und der Fluiddruck in Teil 2 wird in den Teil 1 der Fluidleitung 1, 2 übergeben, wobei der Teil 1 insoweit über den Steuerkolben 84 der Betätigungseinrichtung 18 in fluidführender Verbindung mit dem weitgehend drucklosen Rücklaufanschluss R des beschriebenen Wegeventiles 74 ist. Für die beschriebenen Ansteuervorgänge haben die beiden fluidführenden Zweige 96, 98 jeweils eine Drosselstelle gebildet durch eine Querschnittsverringerung 100, 102.

Damit ist die erfindungsgemäße hydraulische Ventilvorrichtung in beiden Fließrichtungen dicht und es ist insoweit ein doppelt-sitzdichtes, entsperrbares Rückschlagventil geschaffen. Die in der Fig. 2 aufgezeigte alternative Ausführungsform kann wiederum mit entsprechender Einbaulage an die Stelle der entsperrbaren Rückschlagventile nach der Fig. 3 treten und insoweit zu einer verbesserten Funktion des Wegeventils 74 im beschriebenen Umfang führen.

## Patentansprüche

1. Hydraulische Ventilvorrichtung
- mit einem Ventilgehäuse (10),
- mit einem von einer Betätigungseinrichtung (18) ansteuerbaren Pilotkolben eines Pilotventils (20), der mittels eines ersten Energiespeichers (28) in Richtung eines Ventilsitzes (30) des Ventilgehäuses (10) verfahrbar ist,
- wobei mittels des Pilotkolbens (20) ein Fluidanschluß (T) im Ventilgehäuse (10) mit einem Fluidraum (22) eines Sperrkolbens (24) eines Sperrventils verbindbar ist, der mindestens eine fluidführende Verbindungsleitung (1,2) der Ventilvorrichtung ansteuert und eine fluidführende Steuerleitung (26) aufweist, die von der Verbindungsleitung (1,2) in den Fluidraum (22) des Sperrkolbens (24) mündet, der von einem zweiten Energiespeicher (32) in Richtung eines zweiten Ventilsitzes (34) bewegbar ist,
- wobei der Pilotkolben des Pilotventils (20) und der Sperrkolben (24) des Sperrventils parallel zueinander verschiebbar innerhalb des Ventilgehäuses (10) geführt sind, und
- wobei der Pilotkolben (20) und der Sperrkolben (24) durch Einwirkung mindestens einer der beiden Energiespeicher (28,32) in gegenläufiger Richtung auf ihren jeweils zuordenbaren Ventilsitz (30;34) zubewegbar sind,
- **dadurch gekennzeichnet, dass** der erste (28) und der zweite Energiespeicher (32) sowie der Sperrkolben (24) im Fluidraum (22) angeordnet sind und gemeinsam mit dem Pilotkolben (20) und der Betätigungseinrichtung (18) koaxial zur Mittenachse des Fluidraums (22) angeordnet sind,
- dass das Pilotventil (20) auf der Rückseite des Sperrkolbens (24) und auf dessen Mittenachse derart angeordnet ist, dass sein sitzdichter Pilotkolben (20) in den Fluidraum (22) ragt, und
- dass die Betätigungseinrichtung (18) einen Betätigungsmagneten oder eine Fluidansteuerleitung (Y) aufweist, die von einem Steuerkolben (84) der Ventilvorrichtung mit Fluiddruck beaufschlagbar jeweils eine Bewegung des Ansteuerkolbens (16) veranlassen.

2. Ventilvorrichtung nach Anspruch 1, **dadurch gekennzeichnet, dass** eine Mündungsstelle (40), an der die fluidführende Steuerleitung (26) in den Fluidraum (22) des Sperrkolbens (24) mündet, von dem Pilotventil (20) verschließbar ist.

3. Ventilvorrichtung nach einem der vorhergehenden Ansprüche, **dadurch gekennzeichnet, dass** die fluidführende Steuerleitung (26) in zwei Zweige (96, 98) aufgeteilt ist, die jeweils mit ihrem einen Ende in einen Ventilraum (99) einer Ventileinrichtung (90) und mit ihrem anderen Ende jeweils in einen Teil (2) der Verbindungsleitung (1, 2) bzw. in den Fluidraum (22) münden.

4. Ventilvorrichtung nach Anspruch 3, **dadurch gekennzeichnet, dass** die Ventileinrichtung (90) ein Ventilteil (92) aufweist, vorzugsweise in Form einer Ventilkugel, die in Wandungsteilen des Sperrkolbens (24) geführt eine Anschlussstelle (94) der Ventileinrichtung (90) vom Fluiddurchfluss her ansteuert.

5. Ventilvorrichtung nach einem der vorhergehenden Ansprüche, **dadurch gekennzeichnet, dass** der Fluidanschluss (T) im Ventilgehäuse (10) ein Niederdruck-, insbesondere ein Tankanschluss ist.

6. Ventilvorrichtung nach einem der vorhergehenden Ansprüche, **dadurch gekennzeichnet, dass** die Fluidansteuerleitung (Y) über eine Drosselverbindungsstelle (62) fluidführend mit einem Kammerraum (64) des Ansteuerkolbens (16) permanent verbunden ist, und dass der Kammerraum (64) bei geöffnetem Pilotventil (28) eine Fluidverbindung zwischen dem Fluidanschluss (T) im Ventilgehäuse (10) und dem Fluid-raum (22) des Sperrkolbens (24) herstellt.

7. Ventilvorrichtung nach einem der vorhergehenden Ansprüche, **dadurch gekennzeichnet, dass** der Steuerkolben (84) zum Ansteuern einer Arbeitsgerätschaft (68), die an mindestens einem Nutzanschluss (A, B) der Ventilvorrichtung angeschlossen ist, mittels des Sperrkolbens (24) die fluidführende Verbindungsleitung (1, 2) freigibt oder absperrt.

8. Ventilvorrichtung nach Anspruch 7, **dadurch gekennzeichnet, dass** für jeden mittels des Steuerkolbens (84) ansteuerbaren Nutzanschluss (A, B) ein mittels des Pilotventils (20) ansteuerbarer Sperrkolben (24) vorhanden ist.

## Claims

1. A hydraulic valve device
- having a valve housing (10),
- with a pilot piston of a pilot valve (20), which piston can be actuated by an actuating device (18), and which piston can be moved in the direction of a valve seat (30) of the valve housing (10) by means of a first energy storage device (28),
- by means of the pilot piston (20) a fluid port (T) in the valve housing (10) being connectable to a fluid chamber (22) of a shut-off piston (24) of a shut-off valve which activates at least one fluid-carrying connecting line (1, 2) of the valve device, and has a fluid-carrying control line (26) which discharges from the connecting line (1, 2) into the fluid chamber (22) of the shut-off piston (24) which can be moved in the direction of a second valve seat (34) by a second energy storage device (32),
- the pilot piston of the pilot valve (20) and the shut-off piston 924) of the shut-off valve being guided moveably, parallel to one another, within the valve housing (10), and
- the pilot piston (20) and the shut-off piston (24) being moveable towards their respective assignable valve seat (30;34) in the opposite direction by the effect of at least one of the two energy storage devices (28, 32),
- **characterised in that** the first (28) and the second energy storage device (32) and the shut-off piston (24) are located in the fluid chamber (22), and are located together with the pilot piston (20) and the actuation device (18) coaxially to the middle axis of the fluid chamber (22),
- that the pilot valve (20) is located on the back of the shut-off piston (24) and on the middle axis of the latter such that its seatsealed pilot piston (20) projects into the fluid chamber (22), and
- that the actuating device (18) has an activating magnet or a fluid activation line (Y) which, being acted upon with fluid pressure by a control piston (84) of the valve device, respectively bring about a movement of the activating piston (16).

2. The valve device according to Claim 1, **characterised in that** a discharge point (40) at which the fluid-carrying control line (26) discharges into the fluid-carrying control line (26) discharges into the fluid chamber (22) of the shut-off piston (24) can be closed by the pilot valve (20).

3. The valve device according to any of the preceding claims, **characterised in that** the fluid-carrying control line (26) is divided into two branches (96, 98), each of which with its one end discharges into a valve chamber (99) of a valve device (90) and with their other end respectively into one part (2) of the connecting line (1, 2) or into the fluid chamber (22).

4. The valve device according to Claim 3, **characterised in that** the valve device (90) has a valve part (92), preferably in the form of a valve ball which, routed in wall parts of the shut-off piston (24), activates a connecting point (94) of the valve device (90) in terms of fluid flow.

5. The valve device according to any of the preceding claims, **characterised in that** the fluid port (T) in the valve housing (10) is a low pressure port, especially a tank port.

6. The valve device according to any of the preceding claims, **characterised in that** the fluid activation line (Y) is permanently connected to a chamber space (64) of the activation piston (16) via a throttle connection site (62) such as to carry fluid, and that the chamber space (64) with the pilot valve (28) open establishes a fluid connection between the fluid port (T) in the valve housing (10) and the fluid chamber (22) of the shut-off piston (24).

7. The valve device according to any of the preceding claims, **characterised in that** the control piston (84) for activating equipment (68) which is connected to at least one user port (A, B) of the valve device clears or shuts off the fluid-carrying connecting line (1, 2) by means of the shut-off piston (24).

8. The valve device according to Claim 7, **characterised in that** there is one shut-off piston (24) which can be activated by means of the pilot valve (20) for each user port (A, B) that can be activated by means of the control piston (84).

## Revendications

1. Dispositif de vanne hydraulique
- comprenant un corps (10) de vanne,
- comprenant un piston pilote qui peut être commandé par un dispositif (18) d'actionnement d'une vanne (20) pilote et qui, au moyen d'un premier accumulateur (28) d'énergie, peut être déplacé dans la direction d'un siège (30) de vanne du corps (10) de vanne,
- dans lequel, au moyen du piston (20) pilote, un raccord (T) de fluide du corps (10) de vanne peut être mis en communication avec un espace (22) pour du fluide d'un piston (24) d'arrêt d'une vanne d'arrêt, qui commande au moins un conduit (1, 2) de liaison conduisant du fluide du dispositif de vanne et qui a un conduit (26) de commande conduisant du fluide, qui débouche du conduit (1, 2) de liaison dans l'espace (22) pour du fluide du piston (24) d'arrêt, lequel peut être déplacé par un deuxième accumulateur (32) d'énergie dans la direction d'un deuxième siège (34) de vanne,
- dans lequel le piston pilote de la vanne (20) pilote et le piston (24) d'arrêt de la vanne d'arrêt sont guidés de manière à pouvoir coulisser l'un par rapport à l'autre parallèlement dans le corps (10) de vanne, et
- dans lequel le piston (20) pilote et le piston (24) d'arrêt peuvent, par l'action d'au moins l'un des deux accumulateurs (28, 32) d'énergie, être déplacés dans le sens contraire pour venir sur leur siège (30, 34) de vanne pouvant leur être associé respectivement,
- **caractérisé en ce que** le premier (28) et le deuxième accumulateurs (32) d'énergie ainsi que le piston (24) d'arrêt sont disposés dans l'espace (22) pour du fluide et sont disposés, conjointement avec le piston (20) pilote et le dispositif (18) d'actionnement, coaxialement à l'axe médian de l'espace (22) pour du fluide,
- **en ce que** la vanne (20) pilote est disposée du côté arrière du piston (24) d'arrêt et sur son axe médian, de manière à ce que son piston (20) pilote à siège étanche pénètre dans l'espace (22) pour du fluide, et
- **en ce que** le dispositif (18) d'actionnement comporte un aimant d'actionnement ou une ligne (Y) de commande de fluide, qui, en pouvant être soumise à la pression de fluide par un piston (84) de commande du dispositif de vanne, provoque respectivement un mouvement du piston (16) de commande.

2. Dispositif de vanne suivant la revendication 1, **caractérisé en ce qu'**un point (40) d'embouchure, où le conduit (26) de commande conduisant du fluide débouche dans l'espace (22) pour du fluide du piston (24) d'arrêt, peut être fermé par la vanne (20) pilote.

3. Dispositif de vanne suivant l'une des revendications précédentes, **caractérisé en ce que** le conduit (26) de commande conduisant du fluide est subdivisé en deux branches (96, 98), qui débouchent respectivement par l'une de leurs extrémités dans une chambre (99) de vanne d'un dispositif (90) de vanne et par leur autre extrémité respectivement dans une partie (2) du conduit (1, 2) de liaison ou respectivement dans l'espace (22) pour du fluide.

4. Dispositif de vanne suivant la revendication 3, **caractérisé en ce que** le dispositif (90) de vanne comporte une partie (92) de vanne, de préférence sous la forme d'une bille de vanne, qui, guidée dans des parties de paroi du piston (24) d'arrêt, commande un point (94) de raccord du dispositif (90) de vanne par le débit de fluide.

5. Dispositif de vanne suivant l'une des revendications précédentes, **caractérisé en ce que** le raccord (T) de fluide dans le corps (10) de vanne est un raccord basse pression, en étant notamment un raccord pour une cuve.

6. Dispositif de vanne suivant l'une des revendications précédentes, **caractérisé en ce que** la ligne (Y) de commande de fluide est reliée de manière permanente par un point (62) de liaison à étranglement, de manière à conduire du fluide à une chambre (64) du piston (16) de commande et **en ce que** la chambre (64) ménage, lorsque la vanne (28) pilote est ouverte, une liaison de fluide entre le raccord (T) du fluide du corps (10) de vanne et l'espace (22) pour du fluide du piston (24) d'arrêt.

7. Dispositif de vanne suivant l'une des revendications précédentes, **caractérisé en ce que** le piston (84) de commande dégage ou obture, pour commander un équipement (68) de travail qui est raccordé à au moins un raccord (A, B) utile du dispositif de vanne, à l'aide du piston (24) d'arrêt le conduit (1, 2) de liaison conduisant du fluide.

8. Dispositif de vanne suivant la revendication 7, **caractérisé en ce qu'**il y a, pour chaque raccord (A, B) utile pouvant être commandé à l'aide du piston (84) d'arrêt, un piston (24) d'arrêt pouvant être commandé au moyen de la vanne (20) pilote.
